Europäisches Patentamt

European Patent Office

Office européen des brevets

(19)

(11) Publication number : **0 499 404 A2**

(12) # EUROPEAN PATENT APPLICATION

(21) Application number : **92301001.1**

(22) Date of filing : **06.02.92**

(51) Int. Cl.⁵ : **G06F 9/44**

(30) Priority : **15.02.91 US 656539**

(43) Date of publication of application :
**19.08.92 Bulletin 92/34**

(84) Designated Contracting States :
**DE FR GB IT NL**

(71) Applicant : **TEXAS INSTRUMENTS
INCORPORATED
13500 North Central Expressway
Dallas Texas 75265 (US)**

(72) Inventor : **Dawson, William N.
124 Hamilton Terrace
London NW8 9UT (GB)**
Inventor : **Hebel, Larry D.
1104 Meadow Creek
Allen, Texas 75002 (US)**
Inventor : **Stone, Gary E.
2713 Meadowstone Court
Carrollton, Texas 75006 (US)**

(74) Representative : **Blanco White, Henry Nicholas
et al
ABEL & IMRAY Northumberland House
303-306 High Holborn
London WC1V 7LH (GB)**

(54) **Object-oriented graphical user interface.**

(57) A method for providing a generic user inter-
face (14) between a graphical user interface
program (11) and an application program (15) is
provided. The method comprises the steps of
defining and providing a graphical visual element for display on the screen. A user input (50,
51, 52) originating from a data entry device is
awaited for a received from the graphical user
interface program in response to the graphical
visual elements. The user input is then processed in accordance with the graphical visual
element definitions.

FIG. 1

EP 0 499 404 A2

TECHNICAL FIELD OF THE INVENTION

This invention relates in general to the field of computer user interface tools. More particularly, the present invention relates to an object-oriented graphical user interface.

BACKGROUND OF THE INVENTION

Computer user-friendliness is a goal that the computer industry has been attempting to achieve. More user-friendly data input devices, such as mouses, light pens and touch sensitive monitors have been developed to make data manipulation more ergonomic. The emergence of visual user interface techniques and tools, such as pull-down menus, action bars, windows, icons, etc., have made computers more accessible than ever. The popularity of visual user interface techniques led to the design, development and marketing of a number of graphical user interface software which are available commercially. These programs give computer application programmers easy access and use of such visual tools. Examples of these graphical user interface software are Presentation Manager (PM) which runs on the IBM OS/2 environment, Windows which runs on IBM DOS, and Motif which runs on the UNIX operating system. It can be expected that each of these software packages is unique to one another, where each requires different function calls from the application program to produce the same look and feel on the computer screen.

Unfortunately, the dependency of application programs on the graphical user interface software gives rise to a number of problems. The first problem is associated with the portability of the application programs from one operating system platform to another. Currently there exist two options. The first option is to wait until a graphical user interface program that functions the same way as the original graphical user interface is implemented to run in the destination operating system. The second option is to modify the application program so that it may operate with the graphical user interface software in the destination operating system. Obviously, the first option is not viable since one may wait indefinitely for the design, development and marketing of such a package, where the application programmer has no control over the matter. The second option may be viable but is not practical, since an application program may be of such immensity that it may take countless hours to effect the change. Additionally, the software engineer must learn and be proficient in another operating system environment and graphical user interface. Therefore, portability of the application programs, a valued property of computer software, is seriously threatened.

Another problem associated with the use of graphical user interface software is the maintainability of the application programs when the graphical user interface program is modified in any manner by its vendor. It is common for a software vendor to issue revised versions of the programs it has made available on the market. Although utmost care is often taken to ensure compatibility with previous versions, there are times when incompatibility is unavoidable. Therefore, the application programs may require modifications so that it can be executed using the latest revised version of the graphical user interface. Again, the application program may be of such immense size that such modifications are laborious, time-consuming and impractical. Maintainability of the application program is therefore drastically reduced.

The solution to the above-described problems is provided by the present invention by providing a generic interface layer between graphical user interface programs and application programs across all platforms. The application programs can therefore be ported to another operating system environment without any modification. In addition, the present invention supports the System Application Architecture (SAA) Common User Access (CUA) Graphical Model defined by IBM. CUA is a graphical user interface standard well accepted by the industry. For further detail on the standard please refer to the IBM manual Common Usey Access, Advanced Interface Design Guide (SC26-45882) incorporated herein by reference.

SUMMARY OF THE INVENTION

In accordance with the present invention, apparatus and a method for are provided which substantially eliminate or reduce disadvantages and problems associated with prior circuits.

In one aspect of the present invention, apparatus for providing a generic user interface between a graphical user interface program and an application program is provided. The apparatus comprises means for defining and providing a graphical visual element for display on the screen. Means for receiving user input originating from a data entry device receives the user input in response to the graphical visual element definition. The user input is then processed in accordance with the graphical visual element definitions.

In another aspect of the present invention, a method for providing a generic user interface between a graphical user interface program and an application program is provided. The method comprises the steps of defining and providing a graphical visual element for display on the screen. A user input originating from a data entry device is awaited for and received from the graphical user interface program in response to the graphical visual element. The user input is then processed in accordance with the graphical visual element definitions.

An important technical advantage of the present invention is promoting the portability of application programs that are heavily dependent on graphical user interface programs. Almost without exception, each graphical user interface program is developed to execute in one operating system environment. Therefore, once an application program is implemented to use one graphical user interface program, it is bound to that environment. With the present invention, the application programs are developed to utilize the software graphics tools of the graphical user interface program through the present invention, so that porting an application program to a different platform may be done without any modification.

Another important technical advantage of the present invention is the isolation of the development of application programs from the differences and idiosyncracies resulting from revisions of graphical user interface programs. Because the immensity of some application programs precludes modifications, the application programs are buffered from such idiosyncracies by the present invention.

## BRIEF DESCRIPTION OF THE DRAWINGS

For a better understanding of the present invention, reference may be made to the accompanying drawings, in which:

FIG. 1 is a block diagram illustrating the environment in which the present invention operates;

FIG. 2 is a sample screen illustrating some of the various visual tools supported by the present invention;

FIG. 3 is a block diagram illustrating the data flow between a graphical user interface, the present invention, and an application program;

FIG. 4 is a modified railroad diagram of the START function;

FIG. 5 is a modified railroad diagram of the DIAGRAM function;

FIG. 6 is a modified railroad diagram of the WAIT function;

FIG. 7 is a modified railroad diagram of the INITIALIZATION function;

FIG. 8 is a modified railroad diagram of the COMMAND ENABLE function;

FIG. 9 is a modified railroad diagram of the KEYBOARD INPUT function;

FIG. 10 is a modified railroad diagram of the MOUSE INPUT function;

FIG. 11 is a modified railroad diagram of the MESSAGE function;

FIG. 12 is a modified railroad diagram of the SCROLL function;

FIG. 13 is a modified railroad diagram of the COMMAND function;

FIG. 14 is a modified railroad diagram of the REFRESH function;

FIG. 15 is a modified railroad diagram of the PANEL function;

FIG. 16 is a modified railroad diagram of the PANEL INITIALIZATION function;

FIG. 17 is a modified railroad diagram of the PANEL WAIT function;

FIG. 18 is a modified railroad diagram of the PANEL DISPLAY function;

FIG. 19 is a modified railroad diagram of the PROCESS INPUT function;

FIG. 20 is a modified railroad diagram of the TEXT EDIT function;

FIG. 21 is a modified railroad diagram of the PERMITTED VALUE SELECTION function;

FIG. 22 is a modified railroad diagram of the LIST function;

FIG. 23 is a modified railroad diagram of the COMMAND function; and

FIG. 24 is a data modeling diagram of a preferred embodiment of the present invention.

## DETAILED DESCRIPTION OF THE INVENTION

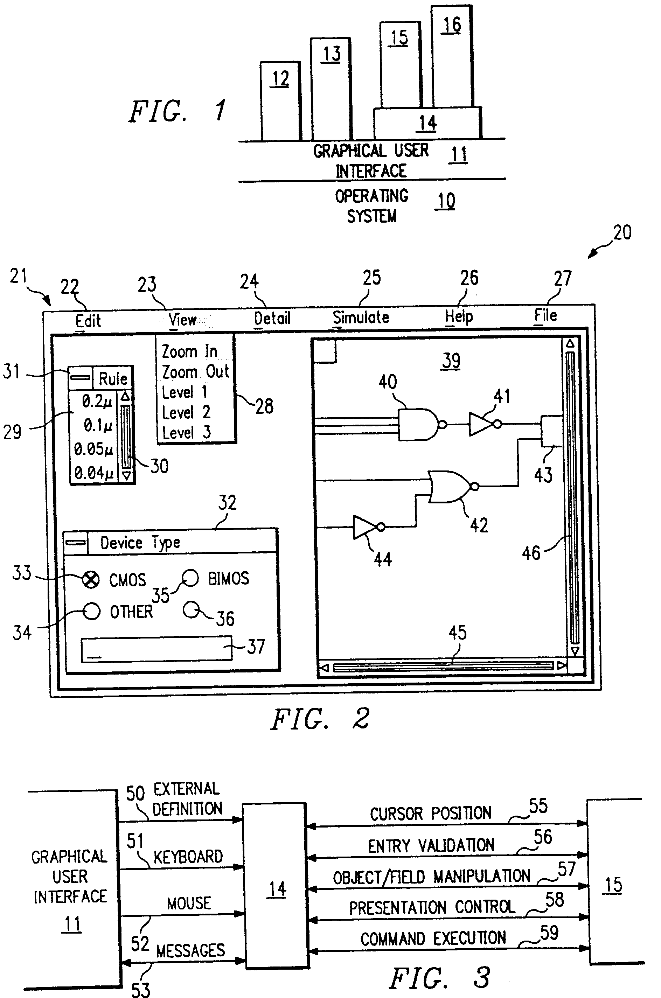

With reference to the drawings, FIG. 1 illustrates the environment in which the present invention operates and the problems that the present invention alleviates. As shown in FIG. 1, an operating system 10 and a graphical user interface 11 provide a platform for application software 12 and 13. Because application software 12 and 13 are closely associated with operating system 10 and graphical user interface software 11, any modifications in operating system 10 and/or graphical user interface software may directly affect the execution of application software 12 and 13. Furthermore, because application software 12 and 13 are developed to directly interface with a specific graphical user interface software 11 in a particular operating system environment 10, portability of application programs 12 and 13 is severely detrimented.

The present invention is an object-oriented graphical user interface 14 that provides a generic interface to application programs 15 and 16. The present invention utilizes a software development approach wherein data and processes that act on those data are combined into "objects." The result is an object-oriented graphical user interface 14 with a more consistent use of the data. Implemented to work through graphical user interface 14 in this manner, application programs 15 and 16 are isolated from any idiosyncracies in operating system 10 or graphical user interface 11 due to differences in revised versions. In addition, application programs 15 and 16 are readily portable to another operating system environment supporting a different graphical user interface program 11, because graphical user interface 14 provides a generic interface therefor.

It may be instructional to describe and show an exemplary computer screen displaying a sample of visual user interface tools contemplated by the present invention. Referring to FIG. 2, a computer screen 20 is shown. Across the top of the screen is what is commonly called an action bar 21 having a number of user-selectable fields 22-27. Each field 22-27 may be selected to reveal a pull-down menu 28 listing additional selections accessible by the user. A second tool, shown on the upper left corner of screen 20, is a list window 29 which allows a user to view a static or dynamic list of selectable items. Windows generally are movable, sizable and scrollable. As shown, a scroll bar 30 is provided to control window movement up and down the list, and "RULE" is a title 31 of list window 29. Another tool shown is a window 32 displaying several items selectable and deselectable by toggling their respective push buttons 33-36 on and off. Additionally, a data entry field 37 is available to permit entry of an alphanumeric string. On the right half of screen 20 is a window 39 displaying a number of selectable objects 41-44 (logic gates), certain parts of which may also be selectable (input, output, etc.). Scroll bars 45 and 46 further provide window movement in the horizontal and vertical directions, respectively. In each instance, the user receives feedback from object-oriented graphical user interface 14 any time an object or field is selected by highlighting it or otherwise an indication of some kind. In addition, the user is reminded, for example, by a beep tone, if a selection he or she made is unavailable. It is important to note that FIG. 2 merely illustrates a sample of visual user interface tools and in no way limits the type and properties of the visual tools contemplated by the present invention.

For the purpose of the discussion below, a window that has an action bar is called a diagram and a window that has push buttons is called a panel. Diagrams and panels correspond to windows and dialogue boxes in the Common User Access standard. Each diagram and each panel is defined via a table (not shown). The tables contain data such as resource identification numbers which represent the resources each table controls. In addition, each table has an associated set of commands which defines the actions that a user may instruct a diagram or panel to perform. Externally, the associated commands are displayed as menu items in a diagram and push buttons in a panel. Panels each additionally has a set of fields that define the type and property of information that a user may enter via the panel. Each field has a presentation style which defines how the field is to be implemented and presented to the user. The fields are typically presented in the form of a control that allows a user to enter data or make a selection, such as pull-down menu 28 or data entry field 37. The table-driven mechanism is described in more detail below.

FIG. 3 illustrates the information flow between graphical user interface 11, object-oriented graphical user interface 14 and application program 15. Between graphical user interface 11 and object-oriented graphical user interface 14 information such as external definitions 50, keyboard input 51, mouse input 52 and messages 53 are passed. External definitions 50 are operating system-specific graphical descriptions used by object-oriented graphical user interface 14. Keyboard and mouse inputs 51 and 52 represent the data and/or control inputs that a user has entered on user-interface devices such as a mouse and a keyboard (not shown). Messages 53 represent those information received from user input devices (not shown) or operation system 10 that are already interpreted by graphical user interface 11.

Object-oriented graphical user interface 14 receives and manipulates the information from graphical user interface 11 described above and makes it available to application program 15. Among the information passed between object-oriented graphical user interface 14 and application program 15 are cursor position data 55, such as desired scroll movement (up, down, left, right, etc.), and queries from object-oriented graphical user interface 14 to inquire about the current cursor position. In addition, object-oriented graphical user interface 14 validates user entry 56 on the basis of user-defined types, lengths, and valid inputs, for example. Validation may be performed on a character or field level. Object-oriented graphical user interface 14 also provides object and field manipulation data 57, such as interpreting a mouse input as selection of an object or field. An example of presentation control information 58 is one that permits the disabling of a field or object so that a user cannot alter its value. Finally, object-oriented graphical user interface 14 also provides application program 15 interpretations of user input as the selection of a command to be executed 59. It is important to note that object-oriented graphical user interface 14 provides a generic interface layer between application programs 15 and 16 and graphical user interface 11 so that if another operating system and graphical user interface program is contemplated as an alternate platform, application programs 15 and 16 are readily portable thereto without any modification.

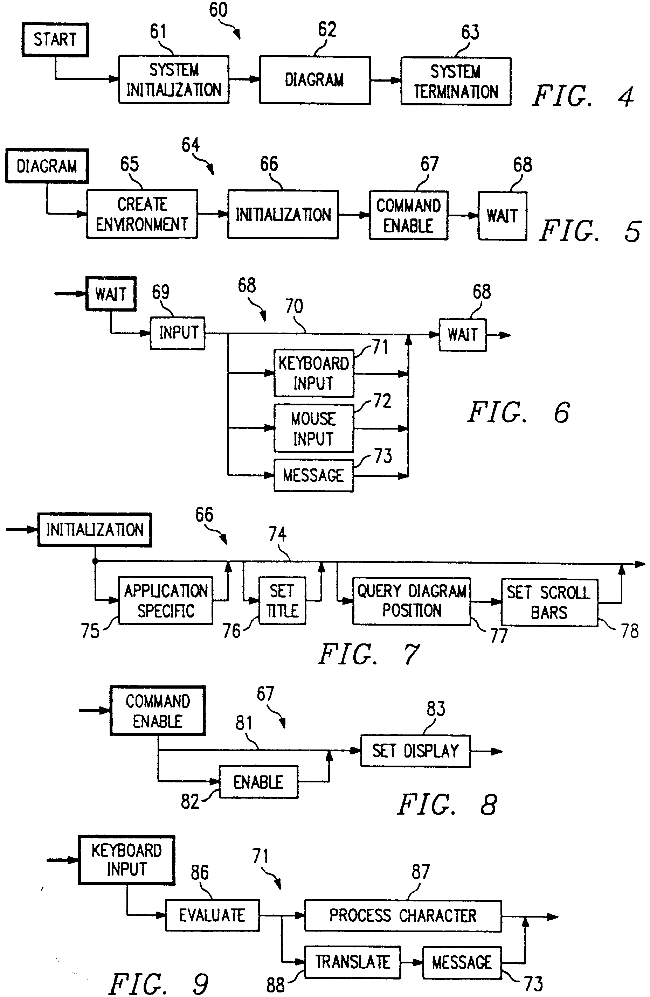

Referring to FIGS. 4-23, logic flow of various functions made in accordance with the teachings of the present invention is shown. More specifically, FIGS. 4-14 generally illustrate the logic of those functions associated with diagrams, and FIGS. 15-23 generally illustrate the logic of those functions associated with panels. Because of the uniqueness of object-oriented graphical user interface 14, the functions are represented in modified railroad diagram format to better describe the logic flow thereof. A railroad diagram is a software diagraming technique used to present information that is inherently recursive.

Referring to FIG. 4, START 60 starts with function SYSTEM INITIALIZATION 61. As the label implies, SYSTEM INITIALIZATION 61 performs tasks to prepare for the execution of application program 15 and object-oriented graphical user interface 14. This is followed by invoking at least one DIAGRAM 62. Similarly, SYSTEM TERMINATION 63 performs housekeeping tasks at the end of the user interface session. SYSTEM INITIALIZATION and TERMINATION functions 61 and 63 are primarily operating system dependent.

Referring to FIG. 5, the top level logic for DIAGRAM function 64 is shown. When DIAGRAM 64 is invoked, CREATE ENVIRONMENT 61 is first executed followed by INITIALIZATION 62, COMMAND ENABLE 63 and WAIT 64. CREATE ENVIRONMENT 61 performs tasks such as allocation of memory, the size of which is predefined, reading the definitions of associated commands and any other tasks necessary to support the diagram. At INITIALIZATION 66, portions of the diagram to be presented on the screen is configured and formatted.

Referring to FIG. 7 where INITIALIZATION 66 is shown in more detail. INITIALIZATION 66 may do nothing, as shown by a path 74 from left to right, or it may do one or a number of the following tasks: APPLICATION SPECIFIC 75, SET TITLE 76, QUERY DIAGRAM POSITION 77, and/or SET SCROLL BARS 78. APPLICATION SPECIFIC 75 refers to the performance of any initialization tasks that are specified by the application program 15. This optional path provides application program designers the flexibility to specify and define any tasks that is specific to his/her program. APPLICATION SPECIFIC 75 may be skipped by taking path 74. The next optional task is SET TITLE 76. SET TITLE 76 formats and displays the title for the diagram. If the, diagram being created is one in which scrolling may take place, QUERY DIAGRAM POSITION 77 and SET SCROLL BARS 78 respectively determines the position the diagram window is located and sets the scroll bars accordingly.

Returning to FIG. 5 after INITIALIZATION 66, COMMAND ENABLE function 67 is performed. Referring to FIG. 8, COMMAND ENABLE 67 begins with an optional ENABLE task 82, which may not be executed, as shown by path 81. ENABLE 82 determines whether a command should be selectable by a user at any given time and enables the command. At SET DISPLAY 83, the push button, list item or action bar menu item on the screen which represents the corresponding command is shown in high intensity or normal intensity, for example, to indicate command disabled or command enabled, respectively.

Returning to FIG. 5, WAIT function 68 is executed next. Referring to FIG. 6, WAIT 68 waits for the occurrence of an input 69. There may be none, as indicated by path 70, and execution enters WAIT 68 again, or an input may occur from any one of the attached data entry devices, such as a keyboard or mouse.

KEYBOARD INPUT 71 is shown in further detail in FIG. 9. The key stroke or strokes from the keyboard is analyzed by EVALUATE function 86. The evaluated input is then passed to PROCESS CHARACTER 87 or TRANSLATE 88. If the input is the result of a character key on the keyboard being pressed, it may be interpreted by PROCESS CHARACTER 87 to represent the letter corresponding to the key. If the input is, for example, an arrow key, TRANSLATE 88 may convert it to indicate that a scrolling action in direction of the arrow key is desired. This translation is passed to a MESSAGE function 73.

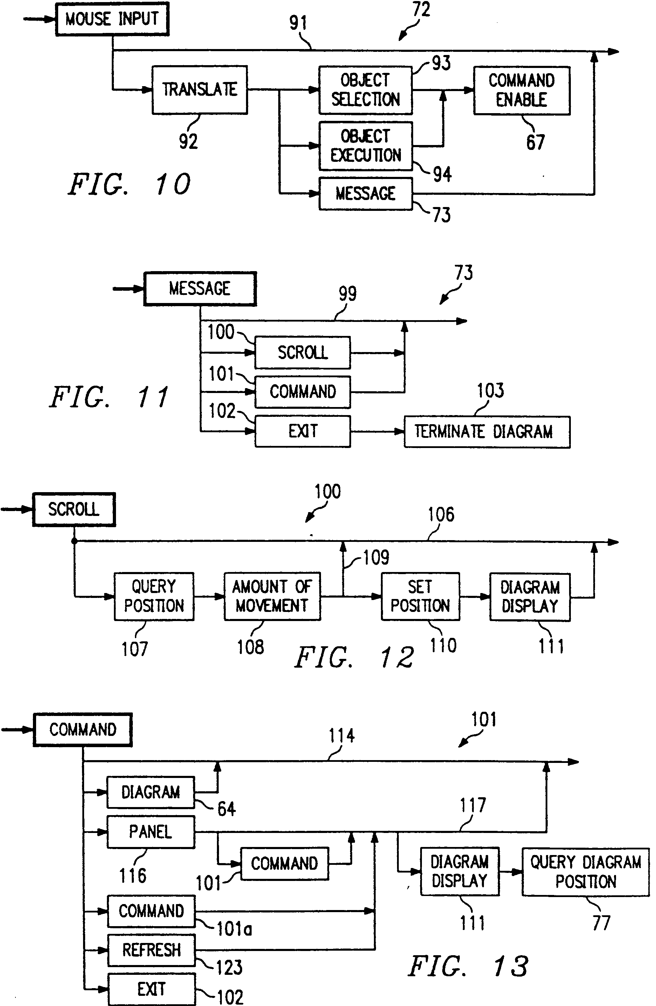

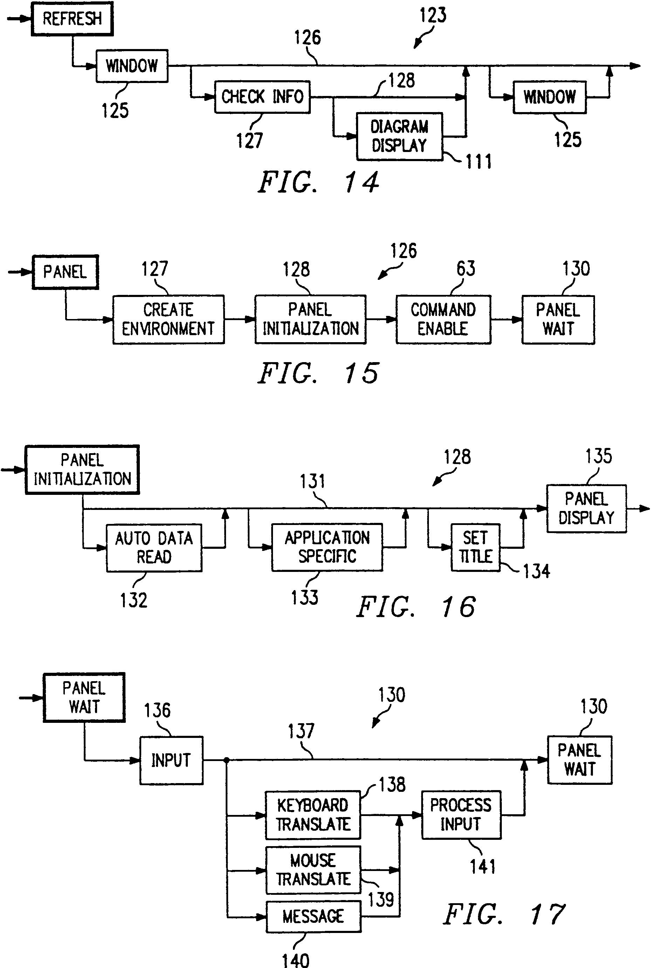

If the input is from a mouse, MOUSE INPUT function 72, shown in FIG. 10, is executed. Referring to FIG. 10, the input from the mouse may be ignored by doing nothing, as indicated by path 91, or it is translated by TRANSLATE function 92. TRANSLATE 92 converts the raw input, such as right button pushed, move x number of units in the y direction, to a generic representation which indicates one of several possibilities. The translated mouse input may be indicative of an object being selected or deselected, command execution, or a message was generated. Each of these translated input is in turn performed by OBJECT SELECTION 93, OBJECT EXECUTION 94, or MESSAGE 73. After OBJECT SELECTION 93 and OBJECT EXECUTION 94 execution branches off to COMMAND ENABLE 67 to enable/disable the object or command and provide a feedback thereof on the screen. A third type of input - message is processed in a MESSAGE function 73 which is described in detail below in conjunction with FIG. 11. After the processing of inputs, WAIT function 68 returns to WAIT 68 again until the user indicates that a program exit is desired. A program exit may be expressible in the form of a keyboard or mouse input that is translated and converted into a message, its processing described in more detail below.

Returning to FIG. 6, a third type of input may be a message from either operating system 10 or application program 15. This is forwarded to MESSAGE function 73, shown in FIG. 11. A message may be ignored, such as a message from operating system 10 that is irrelevant, or it could be input from the keyboard or mouse. If the input indicates movement, it is performed by a SCROLL function 100, shown in more detail in FIG. 12.

Referring to FIG. 12, a scrolling message may be ignored, such as in the case where scrolling is inappropriate, as shown by path 106. Otherwise, QUERY POSITION task 107 determines the current position of the diagram window, and AMOUNT OF MOVEMENT task 108 determines the appropriate amount of movement corresponding to the scrolling message. At this point, the position and amount of movement determined by tasks 107 and 108 may indicate that the demanded scrolling movement may be impossible to perform. For example, the scrolling message indicates movement in the up direction, but the diagram window may have already reached the top of the list. If the demanded scrolling movement cannot be performed, execution returns to path 106 as indicated by path 109. Otherwise, SET POSITION task 110 reconfigures the position of the diagram window and a DIAGRAM DISPLAY task 111 scrolls the screen display accordingly to the new position.

Returning to FIG. 11, a message may be a command that is to be executed, in which case COMMAND function 101 is executed. Referring to FIG. 13 where a more detailed description of COMMAND function 101 is shown. A command may invoke another diagram, or a panel. If another diagram is to be invoked, the logic flow shown in FIG. 5 is followed again. The invocation of a panel is described in detail in conjunction with FIGS. 15-23 below. After the panel is invoked there is an optional path to execute another command, as indicated by COMMAND 101 which is alternate to path 117. An optional path to DIAGRAM DISPLAY 111 is shown. DIAGRAM DISPLAY function 111 is shown in more detail in FIG. 14 and is described below. After DIAGRAM DISPLAY 111, a position determination is made by entering INITIALIZATION function 66 shown in FIG. 7 and executing QUERY DIAGRAM POSITION task 77 to update the diagram position and the scroll bar or bars.

A command may also be another command invoked internally in response to the user input. This is shown as another alternate path COMMAND 101a below DIAGRAM 64 and PANEL 116. At the completion of COMMAND 101a, execution may proceed to DIAGRAM DISPLAY 111 again to update the screen if it altered the screen in any way. A command may also be a command to perform a REFRESH function 123, shown in more detail in FIG. 14.

Referring to FIG. 14, REFRESH function 123 is invoked internally or by an application program 15 when some logic execution has affected internal data in some way that may have alter the presentation of the diagram and this change must be reflected on the screen display. WINDOW task 125 examines the contents of each currently existing diagram window and CHECK INFO 127 compares the contents against the modification and makes appropriate changes if necessary. DIAGRAM DISPLAY function 111 then causes the screen to be updated with the modification, if necessary. Because there may exist more than one diagram, WINDOW function 125 is invoked again until all diagrams are refreshed.

Returning to FIG. 13, additional commands that may be executed is an EXIT function 102. Function 102 simply causes a specified diagram to terminate or cease to be displayed on the screen. Similarly, a message may consist of a exit command causing EXIT 102 task to be executed, as shown in FIG. 11. EXIT 102 is reachable in COMMAND 101 mainly through an internally invoked command whereas the same are reachable in MESSAGE 73 mainly through user input, but the result is the same in both instances.

Referring to FIGS. 15-23, functions mainly associated with panels are shown. In FIG. 15, a panel may be invoked by executing CREATE ENVIRONMENT 127, PANEL INITIALIZATION 128, COMMAND ENABLE 63 and PANEL WAIT 130. CREATE ENVIRONMENT 127 and COMMAND ENABLE 63 perform similar functions as those for a diagram, discussed above. However, associated with panels are somewhat different initialization and waiting functions PANEL INITIALIZATION 128 and PANEL WAIT 130.

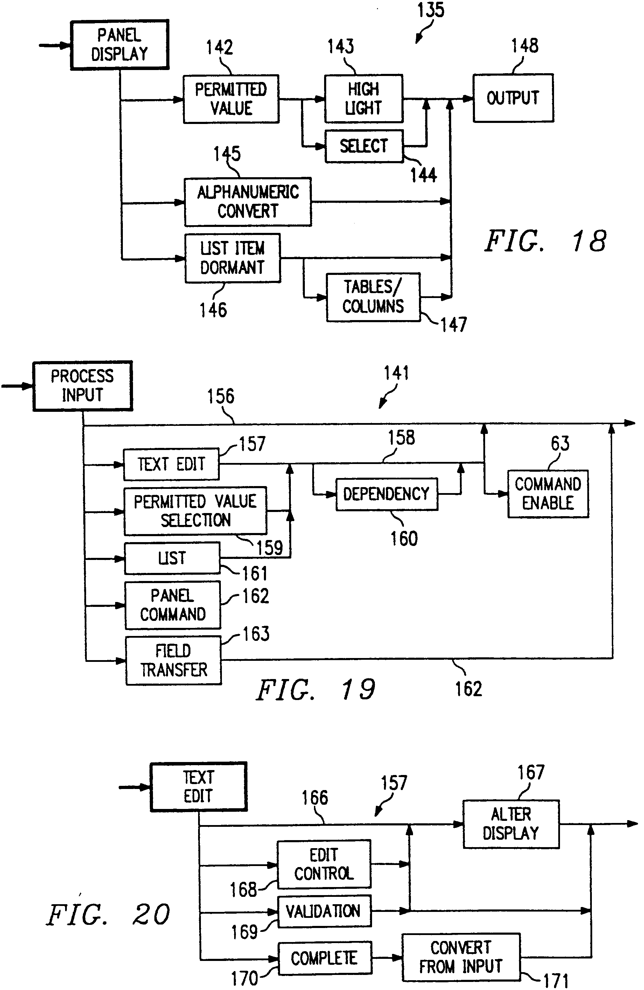

Referring to FIG. 16, PANEL INITIALIZATION 128 may begin by invoking AUTO DATA READ task 132. Task 132 may be best described by way of example. If a piece of data D is stored in a file A, instead of having every panel that requires data D to open file A, read data D and close file A, a field that is implemented to contain data D could be designated as an auto data read field. AUTO DATA READ 132 then performs the task of reading data into those fields designated as auto data read fields. Therefore, data access is simplified. Note that this is an optional function. Subsequently, APPLICATION SPECIFIC functions 133, if any, are performed similar to those associated with diagrams. SET TITLE 134 obtains the title for the panel currently being invoked. DISPLAY function 135 then provides the panel along with its associated data and elements as output to the screen. Details of PANEL DISPLAY function 135 are discussed below in conjunction with FIG. 18.

Referring to FIG. 17 for a more detailed illustration of PANEL WAIT function 130, INPUT 136 receives an input in the form of a keyboard input, mouse input or a message. Since panels differ from a diagram which mainly provides a window view into a database, panels generally provide selectable pushbuttons and or entry fields that are screen position dependent and carry therewith predetermined definitions. Therefore, keyboard and mouse data must be translated to yield meaningful inputs. This task is performed by KEYBOARD TRANSLATE 138 and MOUSE TRANSLATE 140, respectively. The inputs are submitted to a PROCESS INPUT function 141, which is illustrated in FIG. 20 and described below. After inputs are processed, execution waits again by reentering PANEL WAIT 130.

PANEL DISPLAY function is shown in FIG. 18. The items to be displayed in a panel may be one of three types: one having specific permitted values, such as on/off, one having alphanumeric character strings, or one having a specific format, such as a list item. Each of the display types is processed by PERMITTED VALUE 142, ALPHANUMERIC CONVERT 145, and LIST ITEM FORMAT 146 tasks. Following PERMITTED VALUE 142 task, display options may be either to highlight or to place a mark, such as a check, by the selected item and vice versa for an unselected item. These functions are performed by HIGHLIGHT 143 and SELECT 144 tasks. Following LIST ITEM FORMAT 146 task, TABLES/COLUMNS task 147 arranges the list items in either table or column format, so to provide a visually pleasing and organized display on the screen. The resultant data from each task is provided to OUTPUT task 148 which transfers the data to the screen.

Referring to FIG. 19, PROCESS INPUT function 141 is shown in more detail. PROCESS INPUT function 141 is reachable from KEYBOARD TRANSLATE 138, MOUSE TRANSLATE 139 and MESSAGE functions 140, as shown in FIG. 17. It is conceivable that the translated inputs or messages required no processing, as shown by path 156. Otherwise, if a string of alphanumeric characters are entered, TEXT EDIT function 157 is invoked.

TEXT EDIT function 157 is shown in further detail in FIG. 20. TEXT EDIT 157 may do nothing but to supply the input to ALTER DISPLAY function 167 to update the screen display in accordance with the translated input or message. Alternatively, depending on application program 15, EDIT CONTROL task 168 may be invoked to provide editing ability, such as delete or insert key functions, to a user who may be typing in an alphanumeric string. The result of EDIT CONTROL is reflected on the screen by invoking ALTER DISPLAY task 167. VALIDATION function 169 would be invoked upon receiving an input from the user, and is used to validate the input. Validation could be, for example, ensuring the input to an alphabetic field is a character string or that no function keys are entered. Subsequent to VALIDATION task 169, execution may proceed to ALTER DISPLAY task 167 if the input proves to be valid, or bypass it entirely if the input is invalid. COMPLETE task 170 detects that the signaling of input completion by the occurrence of a application program specificevent, such as selection of an OK push button or the ENTER key being pressed on the keyboard. Once complete, CONVERT FROM INPUT task 171 obtains the input and converts it to a predefined value representation, such as the numbers "12.5" to a binary representation thereof. Since the conversion is performed internally, it does not affect the panel display on the screen, and ALTER DISPLAY 167 is bypassed.

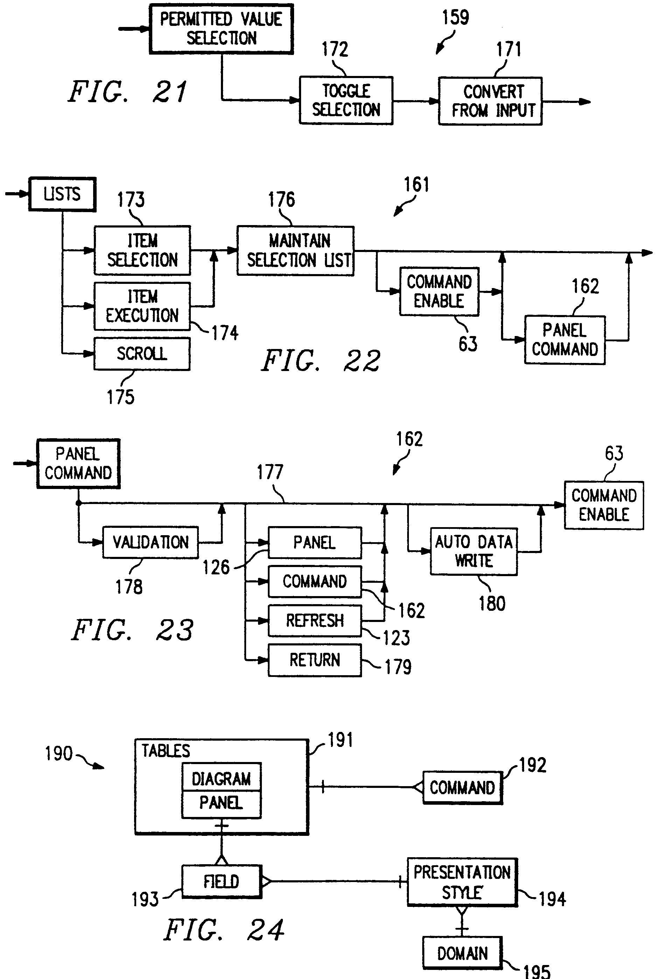

Returning to FIG. 19, a PERMITTED VALUE SELECTION function 159 is an alternate path to TEXT EDIT 157. Referring to FIG. 21, function PERMITTED VALUE SELECTION 159 is shown in more detail. Basically, when an input is of the type that has predefined permitted values, the screen display must be updated to reflect the selection. For example, if the item selected by user input was "ON," it must be toggled off if the item is selected again. This task is performed by TOGGLE SELECTION task 172. CONVERT FROM INPUT task 171 is invoked again to convert the selection to an internal representation and format.

Panels may support and display a scrollable list having a static or dynamic number of list items. Therefore, PROCESS INPUT function 141 in FIG. 19 may also anticipate the selection of a list item. This is processed by LIST function 161, shown in further detail in FIG. 22.

Referring to LIST function 161 in FIG. 22, three tasks ITEM SELECTION 173, ITEM EXECUTION 174 and SCROLL 175 perform according to the three types of inputs possible in lists. As a list is displayed on the screen, one or more list items are available for viewing and selection. The selection may indicate merely the selection/deselection of that item or it could mean executing a command or function associated with that item. ITEM SELECTION 173 and ITEM EXECUTION 174 functions perform the necessary tasks associated with accomplishing the above. MAINTAIN SELECTION LIST 176 is a task that keeps track internally of what items are selected or deselected. Subsequently, if the item selected is a command, COMMAND ENABLE function 63 shown in FIG. 8 is invoked to enable the command and to update the screen display to indicate selection registered accordingly. An optional function PANEL COMMAND 162 may then be invoked. This function is shown in more detail in FIG. 23 and is described below. A third possible input associated with a list is a scrolling input. SCROLL task 175 is invoked to process this input. SCROLL task 175 is similar to SCROLL task 100, except that PANEL DISPLAY function 135 instead of DIAGRAM DISPLAY function 111 is invoked.

As shown in FIG. 19, subsequent to TEXT EDIT 157, PERMITTED VALUE SELECTION 159, and LIST 161 functions, an optional function DEPENDENCY 160 is invocable. DEPENDENCY function 160 is highly application specific and controls the interaction and dependency of functions 157, 159 and 161. It allows dependency chaining to give the application program designer flexibility to embed function invocations as well as control any data-interdependencies within a panel. For example, when a field is changed to accept numeric rather than text, case sensitivity checking is disabled.

A further input that may be associated with a panel is a command which is processed by COMMAND function 162. PROCESS INPUT function 141 may also invoke a FIELD TRANSFER task 163 which essentially controls cursor movement from one field to another field within the panel.

Referring to FIG. 23 for a more detailed illustration thereof, COMMAND function 162 may do nothing more than to invoke COMMAND ENABLE function 63 (FIG. 8), as shown by path 177. However, an application program may require that the command input be validated. This invokes a VALIDATION task 178 which determines whether the command received is a valid or relevant command. The command received may be of four types: to invoke another panel, to execute another command, to refresh the screen or to return to the application program 15. The four command types are processed by PANEL 126, PANEL COMMAND 162, REFRESH 123 and RETURN 179 functions respectively. Subsequently, if any field within the current panel is flagged as an auto data read field, AUTO DATA WRITE function 180 performs the converse of AUTO DATA READ function 132 and updates any database from which the data in the field originated. COMMAND function 162 ends by invoking COMMAND ENABLE function 63 (FIG. 8).

The preferred embodiment of the present,invention uses a table-driven approach, which is shown in a data modeling diagram 190 in FIG. 24. All diagrams and panels are defined by tables 191. Thus, each table represents either a diagram or a panel. These diagram and panel tables provide a definition structure which in effect define the interactions between resources, such as message strings and menu items, and corresponding application programs. More specifically, each table contains information such as resource identification numbers and pointers to functions described in FIGS. 4-23 that are used to control the resources. It is through these referenced functions that control is passed to the application programs. For example, when a diagram has been selected by a user, control is passed to the process function for that diagram. Similarly, when the user has chosen to close a diagram, control is passed to the corresponding exit function for the diagram. Therefore, a function is defined in the diagram and panel definition tables for every action that requires the application program to perform. Additional functions perform refresh and formatting tasks, and dependency tasks for panels as described above.

Each table, representing either a diagram or panel, has an associated set of commands 192 contained in command definition tables. The set of commands 192 associated with each diagram or panel defines the actions that a user may instruct the corresponding diagram or panel to perform. Each command may take the form of: command resource identification number, enable function and process function. The identification number identifies the command. The enable function determines whether the corresponding command should be enabled or selectable at any given time. The process function carries out the identified command and is to be invoked when the command is selected. Externally, diagram commands are presented on the screen as menu items and panel commands as push buttons, as described above.

As described previously, a panel is defined by a set of fields. Therefore, associated with each panel is a set of fields 193 defining the information that may be entered via each panel. Each set of fields 193 for a panel is also defined in a table.

In addition, each field 193 has a presentation style 194 which defines how the field is to be presented to the user. Each presentation style 194 is implemented as a user interface component that allows a user to enter information or select an option. For example, a presentation style 194 for one field 193 may be an edit style that permits the entry of text. To provide control and validate user input, each presentation style 194 also has an associated set of domains 195. Domains 195 specifies the range or set of values that is valid for the corresponding presentation style 194. For example, a domain may specify positive numbers, or a character string.

Although the present invention has been described in detail, it should be understood that various changes, substitutions and alterations can be made thereto without departing from the spirit and scope of the present invention as defined by the appended claims.

## Claims

1. Apparatus for providing a generic user interface between a graphical user interface program and an application program being executed in a computer, said graphical user interface providing a graphical display on a screen, said computer having a data entry device, the apparatus comprising:

    means for defining a graphical visual element and providing a definition thereof;

    means for receiving a user input from said graphical user interface program, said user input originating from said data entry device; and

    means for processing said user input in response thereto and in accordance with said graphical visual element definitions.

2. The apparatus, as set forth in claim 1, wherein said processing means further comprises means for invoking said graphical visual element in response to said received user input.

3. The apparatus, as set forth in claim 2, wherein said graphical visual element defining means comprises:

    a definition table for defining a diagram; and

    a definition table for defining a panel.

4. The apparatus, as set forth in claim 3, wherein said invoking means invokes a diagram in response to said received user input and in accordance with the contents of said diagram definition table.

5. The apparatus, as set forth in claim 3, wherein said invoking means invokes a panel in response to said received user input and in accordance with the contents of said panel definition table.

6. The apparatus, as set forth in claim 1, wherein said data entry device is a keyboard, said user input processing means further comprises:

means for evaluating said received user input; and

means for converting said received user input into a representation internally recognizable by said generic user interface apparatus.

7. The apparatus, as set forth in claim 6, wherein said converting means further comprises:

means for translating said converted user input; and

means for producing a message from said translated user input.

8. The apparatus, as set forth in claim 1, wherein said data entry device is a mouse, said user input processing means further comprises:

means for translating said received user input to indicate an object selection;

means for selecting said object; and

means for displaying said object in a manner indicative of said selection on said screen.

9. The apparatus, as set forth in claim 8, further comprising:

means for defining a command associated with said object;

means for executing said associated command; and

means for displaying the result of said executed command on said screen.

10. The apparatus, as set forth in claim 1, further comprising:

means for translating said received user input into an entry position and value;

means for validating said received user input; and

means for displaying said validated user input at said entry position on said screen.

11. The apparatus, as set forth in claim 1, wherein said graphical visual element defining means further comprises:

means for specifying a set of commands associated with said graphical visual element;

means for enabling each said command; and

means for processing each said command.

12. A method for providing a generic user interface between a graphical user interface program and an application program, said graphical user interface program providing a graphical display on a screen, the method comprising the steps of:

defining a graphical visual element for display on said screen and providing a definition thereof;

receiving a user input from said graphical user interface program in response to said graphical visual element, said user input originating from a data entry device; and

processing said user input in response thereto and in accordance with said graphical visual element definitions.

13. The method, as set forth in claim 20, wherein said graphical visual element defining step further comprises the steps of:

specifying a set of commands associated with each said graphical visual element;

enabling each said command; and

processing each said command.

14. The method, as set forth in claim 20, further comprising the steps of:

specifying and providing information desired in said user input; and

associating said user input information with a graphical visual element.

15. The method, as set forth in claim 25, further comprising the steps of:

displaying a graphical element on said screen in response to said user input specification; and

specifying valid values for said user input.

16. The method, as set forth in claim 26, further comprising the step of validating said user input in response to said specified valid values.

17. The method, as set forth in claim 20, further comprising the step of invoking said graphical visual element in response to said received user input.

18. The method, as set forth in claim 28, wherein said graphical visual element defining step comprises:

specifying a definition table for a diagram; and

specifying a definition table for a panel.

19. The method, as set forth in claim 29, wherein said invoking step further comprises the step of invoking a diagram in response to said received user input and in accordance with the contents of said diagram definition table.

20. The method, as set forth in claim 29, wherein said invoking step further comprises the step of invoking a diagram in response to said received user input and in accordance with the contents of said panel definition table.

21. The method, as set forth in claim 21, wherein said command enabling step comprises the step of invoking an enabling function corresponding to said command.

22. The method, as set forth in claim 21, wherein said command processing step comprises the step of invoking at least one processing function corresponding to said command.

23. The method, as set forth in claim 21, further comprising the step of invoking a function in response-to a corresponding command being enabled.

24. The method, as set forth in claim 20, further comprising the steps of:
    translating said received user input into an entry position and value;
    validating said received user input; and
    displaying said validated user input at said entry position on said screen.

*FIG. 1*

GRAPHICAL USER
INTERFACE     11

OPERATING     10
SYSTEM

20

| Edit | View | Detail | Simulate | Help | File |
|------|------|--------|----------|------|------|

Rule

0.2μ
0.1μ
0.05μ
0.04μ

Zoom In
Zoom Out
Level 1
Level 2
Level 3

Device Type

⊗ CMOS     ○ BIMOS

○ OTHER     ○

*FIG. 2*

50 EXTERNAL
DEFINITION

51 KEYBOARD

MOUSE

52 MESSAGES

53

GRAPHICAL
USER
INTERFACE
11

14

CURSOR POSITION    55

ENTRY VALIDATION    56

OBJECT/FIELD MANIPULATION    57

PRESENTATION CONTROL    58

COMMAND EXECUTION    59

15

*FIG. 3*

START → SYSTEM INITIALIZATION (61) → DIAGRAM (62) → SYSTEM TERMINATION (63)

60

*FIG. 4*

DIAGRAM → CREATE ENVIRONMENT (65) → INITIALIZATION (66) → COMMAND ENABLE (67) → WAIT (68)

64

*FIG. 5*

WAIT → INPUT (69) → WAIT (68)

68 70

KEYBOARD INPUT (71)

MOUSE INPUT (72)

MESSAGE (73)

*FIG. 6*

INITIALIZATION

66 74

APPLICATION SPECIFIC (75) → SET TITLE (76) → QUERY DIAGRAM POSITION (77) → SET SCROLL BARS (78)

*FIG. 7*

COMMAND ENABLE

67 81 83

ENABLE (82) → SET DISPLAY (83)

*FIG. 8*

KEYBOARD INPUT

86 71 87

EVALUATE (86) → PROCESS CHARACTER (87)

TRANSLATE (88) → MESSAGE (73)

*FIG. 9*

FIG. 10

FIG. 11

FIG. 12

FIG. 13

REFRESH

WINDOW
125

126

123

CHECK INFO
127

128

DIAGRAM
DISPLAY
111

WINDOW
125

FIG. 14

PANEL

CREATE
ENVIRONMENT
127

PANEL
INITIALIZATION
128

126

COMMAND
ENABLE
63

PANEL
WAIT
130

FIG. 15

PANEL
INITIALIZATION

AUTO DATA
READ
132

131

APPLICATION
SPECIFIC
133

128

SET
TITLE
134

135

PANEL
DISPLAY

FIG. 16

PANEL
WAIT

INPUT
136

137

130

KEYBOARD
TRANSLATE
138

MOUSE
TRANSLATE
139

MESSAGE
140

PROCESS
INPUT
141

130

PANEL
WAIT

FIG. 17

135

| PANEL DISPLAY | → | 142 PERMITTED VALUE | → | 143 HIGH LIGHT | → | 148 OUTPUT |

FIG. 18

FIG. 19

FIG. 20

FIG. 21

PERMITTED VALUE
SELECTION

172
TOGGLE
SELECTION

159

171
CONVERT
FROM INPUT

FIG. 22

LISTS

173
ITEM
SELECTION

ITEM
EXECUTION

174

SCROLL

175

176
MAINTAIN
SELECTION LIST

161

COMMAND
ENABLE

63

162
PANEL
COMMAND

FIG. 23

PANEL
COMMAND

177

162

63
COMMAND
ENABLE

VALIDATION

178

126

PANEL

COMMAND
162

REFRESH
123

RETURN
179

AUTO DATA
WRITE

180

FIG. 24

190

TABLES
DIAGRAM
PANEL

191

192
COMMAND

193
FIELD

PRESENTATION
STYLE
194

DOMAIN
195